# EUROPÄISCHE PATENTSCHRIFT

(11) **EP 0 755 640 B1**
(45) Veröffentlichungstag und Bekanntmachung des Hinweises auf die Patenterteilung: **30.12.1998**
(21) Anmeldenummer: 96108066.0
(22) Anmeldetag: 21.05.1996
(51) Int. Cl.: A47B 95/00, F16B 12/20, E05D 5/02

(54) **Möbelbeschlag**
Fitting for furniture
Ferrure pour meubles

(30) Priorität: 28.07.1995 DE 19527600
(43) Veröffentlichungstag der Anmeldung: 29.01.1997
(73) Patentinhaber: MEPLA-WERKE LAUTENSCHLÄGER GmbH & Co. KG, D-64354 Reinheim (DE)
(72) Erfinder: Lautenschläger, Horst, 64354 Reinheim (DE); Lautenschläger, Gerhard, 64395 Brensbach-Wersau (DE)
(74) Vertreter: Helber, Friedrich G., Dipl.-Ing.

(56) Entgegenhaltungen:
- EP-A- 0 698 357
- GB-A- 2 028 914
- US-A- 4 141 108
- US-A- 4 232 423

## Beschreibung

Die Erfindung betrifft einen lösbar auf der Oberfäche einer Wand eines Möbelstücks befestigbaren Möbelbeschlag mit zwei von seiner der Oberfläche der Möbelstück-Wand zugewandten Befestigungsfläche vortretenden, in jeweils eine zugeordnete Befestigungsbohrung in der Wand einfuhrbaren Befestigungszapfen aus Kunststoff, in deren hohlem Innern ein in Zapfenlängsrichtung verstellbares und den Befestigungszapfen dabei - abhängig von der Verstellrichtung - aufspreizendes bzw. entspannendes Spreizelement angeordnet ist, welches einen in das offene freie Ende des Befestigungszapfens eingesetzten, sich in Richtung zum Beschlag konisch verjüngenden Spreizkörper aufweist, der passend in einem komplementär konischen Endabschnitt des hohlen Innern des Befestigungszapfens angeordnet ist, wobei an dem zur Befestigungsfläche des Beschlags weisenden konisch verjüngten Ende das Spreizkörpers ein sich durch den Befestigungszapfen und eine anschließende Öffnung im Beschlag hindurch erstreckender Schaft angesetzt ist, an dessen Ende ein sich an einer Druckfläche des Beschlags abstützendes, mit einer Handhabe versehenes und das Spreizelement bei Betätigung verstellendes Betätigungselement angeschlossen ist.

Für die Befestigung von Möbelbeschlagteilen, wie Montageplatten von Scharnieren, Verbindungsbeschlägen, Schubladen-Frontblenden, Haltern etc., die früher fast ausschließlich auf der zugeordneten Möbelwand verschraubt wurden, werden in neuerer Zeit zunehmend Befestigungsanordnungen eingesetzt, bei denen ein oder mehrere von der Befestigungsfläche des Beschlags vortretenden spreizdüßelartiger Befestigungszapfen in jeweils eine zugeordnete komplementäre Bohrung in der Wand des Möbelstücks eingesetzt und dann durch Betätigen des Spreizelements aufgespreizt wird. Die zumeist aus Kunststoff hergestellten und mit umlaufenden Graten versehenen aufspreizbaren Befestigungszapfen ermöglichen es - im Gegensatz zu sogenannten, mit Übermaß gegenüber der zugeordneten Befestigungsbohrung bemessenen Einschlagzapfen - den Beschlagteil einfach und schnell an der vorgesehenen Befestigungsstelle einzusetzen, ohne daß hierbei Preßdruck oder Hammerschläge verwendet werden müßten. Als Spreizelement dient dann zumeist eine im beschlagseitigen Endbereich des Befestigungszapfens angesetzte Schraube, die bei der Montage in den Befestigungszapfen eingeschraubt wird und diesen dann dabei spreizt, wobei der Kopf der Befestigungsschraube den Beschlagteil mit seiner Befestigungsfläche an die Wand des Möbelstücks anzieht. Durch das Erfordernis des Einschraubens der Befestigungsschraube in den Befestigungszapfen ist die Montage aber nur mit einem Schraubenwerkzeug möglich und - insbesondere wenn kein motorgetriebener Schrauber zur Verfügung steht - auch arbeitsaufwendig.

Bei dem als Montageplatte für Möbelscharniere bestimmten Möbelbeschlag der eingangs erwähnten Art (GB 2 028 914 A) ist es bekannt, das Spreizen der Befestigungszapfen in der bestimmungsgemäßen Montagestellung ohne einen Schraubenzieher dadurch zu bewirken, daß am freien Ende des am Spreizkörper angesetzten und durch die Öffnung im Beschlag geführten Schafts ein mit einer Handhabe versehenes Betätigungselement vorgesehen ist, welches ohne ein spezielles Werkzeug eine Verschiebung des Schafts und somit es Spreizkörpers in bzw. entgegen der Spreizrichtung der Befestigungszapfen betätigbar ist.

Der Erfindung liegt die Aufgabe zugrunde, einen solchen, von Hand montierbaren Möbelbeschlag so weiterzubilden, daß die Befestigungszapfen am eigentlichen Beschlagteil unverlierbar und derart vormontierbar gehalten sind, daß eine Fehlmontage des Beschlages im Sinne einer gegenüber der bestimmungsgemaßen Befestigungsstellung auf dem zugeordneten Möbelstück versetzten Befestigungsstellung mit Sicherheit ausgeschlossen ist.

Ausgehend von einem Möbelbeschlag der eingangs erwähnten Art wird diese Aufgabe erfindungsgemäß dadurch gelöst, daß an der Befestigungsfläche des Beschlages eine die Befestigungszapfen in der vorgesehenen relativen Anordnung zueinander haltende dünne Zwischenplatte aus Kunststoff vorgesehen ist, daß am beschlagteilseitigen Ende der Befestigungszapfen jeweils wenigstens ein durch die Öffnung für den Schaft des Spreizelements im Möbelbeschlag hindurchgeführter Hakenansatz vorgesehen ist, welcher den jeweiligen Befestigungszapfen am Möbelbeschlag verriegelt, und daß die Befestigungszapfen, die Zwischenplatte und die Hakenansätze ein integraler Spritzgußteil sind. Die integrale Ausbildung von Zwischenplatte, Befestigungszapfen und Hakenansätzen ermöglicht die Vormontage und Verriegelung der Zwischenplatte am eigentlichen Beschlagteil vor der Montage der Spreizkörper und der Betätigungselemente.

Dabei ist eine Ausgestaltung von Vorteil, bei welcher an jedem Befestigungszapfen wenigstens zwei am beschlagseitigen Ende des Befestigungszapfens zueinander versetzte Hakenansätze vorgesehen sind, welche jeweils einen integral angesetzten federnd verbiegbaren Schaftteil mit jeweils von dessen befestigungszapfenabgewandtem freien Ende radial nach außen abgewinkelten Hakenvorsprung aufweisen, wobei der lichte Abstand zwischen den Schaftteilen der Hakenansätze entsprechend den äußeren Abmessungen des sie durchsetzenden Schafts des Spreizelements gewählt ist. Bei der Montage des Befestigungszapfens bzw. der durch die Zwischenplatte miteinander verbundenen Befestigungszapfen werden dann die Hakenansätze durch die Öffnung im Beschlag hindurchgedrückt, wobei sich die Schaftteile federnd verbiegen, bis die an den Enden vorgesehenen radialen Hakenvorsprünge über die obere Mündung der Öffnungen rasten und die Schaftteile federn in die Ausgangslage zurückspringen. Bei der nachfolgenden Montage des Spreizelements wird der Schaft durch das hohle Innere des Befestigungszapfens und den freien Raum zwischen den Hakenansätzen hindurchgeführt und ein Zurückfedern der Hakenansätze derart, daß sich die Befestigungsbolzen vom Beschlag lösen können, ist mit Sicherheit ausgeschlossen.

Die an den freien Enden der Hakenansätze vorgesehenen Hakenvorsprünge sind zweckmäßig derart abgeschrägt, daß beim Einführen der Hakenansätze in die zugeordnete Öffnung im Beschlag die Schaftteile in der erwähnten Art so lange federnd radial einwärts verbogen werden, bis die Hakenvorsprünge aus dem befestigungsflächenabgewandten oberen Ende der Öffnung austreten und zurückfedern.

Das Betätigungselement weist vorzugsweise wenigstens einen um eine parallel zur Befestigungsfläche des Beschlags verlaufende Achse verdrehbaren Exzenterbauteil auf. Durch eine entsprechende Wahl des Verlaufs der sich an der Druckfläche des Beschlags abstützenden Exzenterfläche des Exzenterbauteils ist ein hinreichender Anzugsweg für das Spreizelement verwirklichbar, wobei auch die von Hand auf die hHandhabe auszuübenden Spreizkräfte durch den Verlauf der Exzenterfläche veränderbar sind.

Als Handhabe ist am Betätigungselement vorzugsweise ein Hebelarm angesetzt, der - durch Veränderung seiner Länge - so bemessen werden kann, daß die Kraft zum aufspreizen des Befestigungszapfens durch die Hebelübersetzung nicht unzulässig hoch wird.

Das Betätigungselement wird in einer vorteilhaften Ausgestaltung der Erfindung als Stanz-Preß-Teil aus Metallblech mit zwei den Schaft des Spreizelements passend zwischen sich aufnehmenden seitlichen Wangen ausgebildet, welche durch einen Bohrungen in den Wangen und dem freien Ende des Schafts durchsetzenden Bolzen verschwenkbar gekoppelt sind, wobei die Wangen im schaftteilseitigen Endbereich so begrenzt sind, daß sie jeweils einen sich an der Druckfläche des Beschlags abstützenden Exzenterbauteil bilden. Durch diese Ausgestaltung wirken die über die Exzenterbauteile in den Schaft des Spreizelements eingeleiteten Spreizkräfte auf gegenüberliegenden Seiten derart, daß der Schaft von Biegebeanspruchungen frei bleibt.

Die Wangen haben weckmäßig eine langgestreckte hebelartige Form und sind an ihren freien Enden durch einen gleichzeitig die Handhabe bildenden Stegteil miteinander verbunden.

Die Erfindung ist in der folgenden Beschreibung eines Ausführungsbeispiels in Verbindung mit der Zeichnung näher erläutert, und zwar zeigt:
- Fig. 1: einen in der erfindungsgemäßen Weise ausgebildeten Möbelbeschlag in Form eines Teils eines Frontblenden-Halterungsbeschlages für Schubladen im Halbschnitt in einer Stellung unmittelbar vor der Montage an einer ausschnittweise und im Schnitt dargestellten Schubladen-Frontblende;
- Fig. 2: den Beschlag-Hauptteil des in Fig. 1 gezeigten Frontblenden-Beschlagteils im Halbschnitt;
- Fig. 3: eine Draufsicht auf den Beschlagteil, gesehen in Richtung des Pfeils 3 in Fig. 2;
- Fig. 4: im Halbschnitt ein Befestigungselement mit zwei durch eine Zwischenplatte miteinander verbundene Befestigungszapfen;
- Fig. 5: eine Unteransicht des Befestigungselement, gesehen in Richtung des Pfeils 5 in Fig. 4;
- Fig. 6: eine Draufsicht auf das Befestigungselement, gesehen in Richtung des Pfeils 56 in Fig. 4;
- Fig. 7: eine Seitenansicht des Spreizelements des Frontblenden-Beschlagteils;
- Fig. 8: eine Seitenansicht des Betätigungselements für das Spreizelement; und
- Fig. 9: eine Ansicht, gesehen in Richtung des Pfeils 9 in Fig. 8.

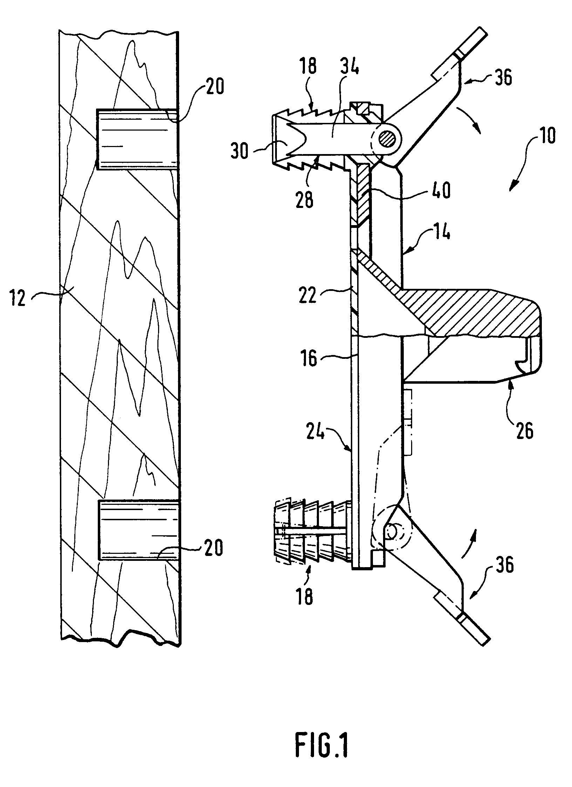

In Fig. 1 ist ein in seiner Gesamtheit mit 10 bezeichneter Möbelbeschlagteil gezeigt, der - im dargestellten Fall - Teil eines Halterungsbeschlages für die werkzeuglose schnelle und einfache Montage - sowie Demontage - der Frontblende 12 einer Schublade am eigentlichen Schubladenkasten ist.

Der Beschlag 10 weist einen langgestreckten streifenförmigen metallischen Befestigungskörper 14 auf, von dessen der Frontblende 12 zugewandter Befestigungsfläche 16 zwei voneinander beabstandete Befestigungszapfen 18 aus Kunststoff vorspringen, die in Bohrungen 20 in der Frontblende 12 einsetzbar und durch Aufspreizung festlegbar sind. Die Befestigungszapfen 18 sind im dargestellten Fall durch eine dünne, im Umriß dem Befestigungskörper entsprechend begrenzte Zwischenplatte 22 zu einem im Spritzgußverfahren hergestellten integralen Befestigungselement 24 verbunden.

Etwa mittig von der frontblendenabgewandten Seite des Befestigungskörpers 14 springt eine Haltelasche 26 vor, die in den hier nicht gezeigten, an oder in einer Schubladen-Seitenwand anzuordnenden zweiten Teil des Frontblenden-Halterungsbeschlages einführbar und dort verriegelbar ist. Die Art und Weise der Aufnahme und Befestigung der Haltelasche 26 im zweiten Beschlagteil ist nicht Gegenstand der vorliegenden Anmeldung, so daß auch ihre Ausgestaltung hier nicht im einzelnen beschrieben werden muß.

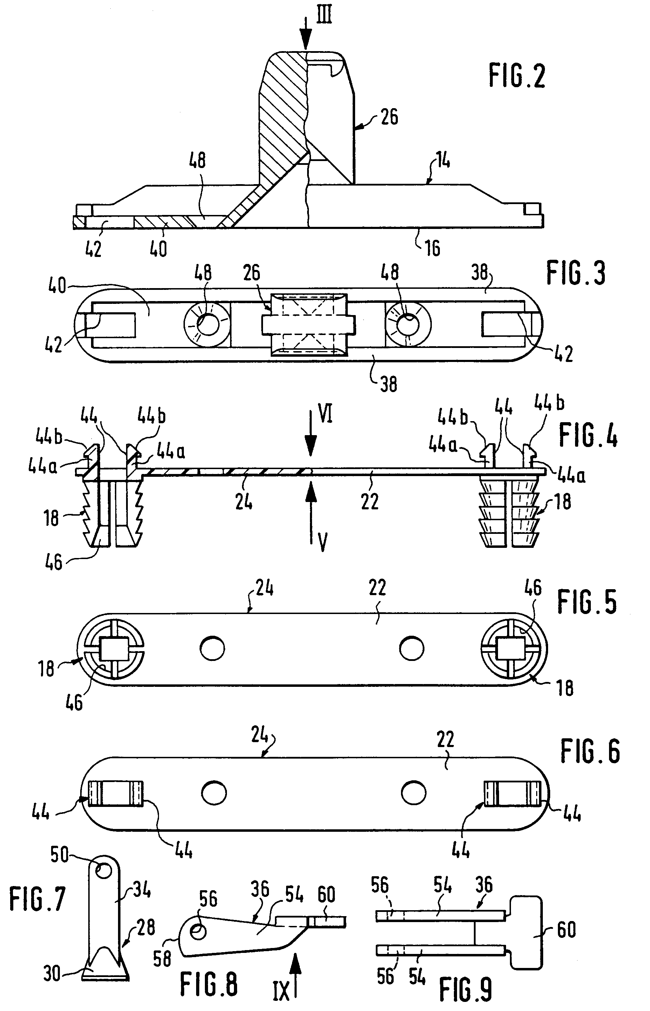

Die Befestigungszapfen 18 sind als in bekannter Weise mit Umfangsgraten versehene hohle Spreizzapfen ausgebildet, in deren Innerem vom frontblendenseitigen freien Ende aus ein Spreizelement 28 eingesetzt ist, das sich aus einem sich in Richtung zum Beschlag 10 konisch verjüngenden Spreizkörper 30 und einem am konisch verjüngten Ende des Spreizkörpers integral angesetzten und sich durch den Befestigungszapfen 18 hindurch und eine Öffnung 42 im Befestigungskörper 14 erstreckenden Schaft 34 zusammensetzt. Am spreizkörperabgewandten freien Ende des Schafts 34 ist jeweils verschwenkbar ein sich auf einer Druckfläche des Befestigungskörpers 14 abstützendes Betätigungselement 36 angelenkt, welches in den Figuren 8 und 9 gesondert dargestellt ist und in Verbindung mit diesen Figuren auch noch im einzelnen beschrieben wird. Auch die übrigen vorerwähnten Elemente des Beschlags 10 sind in gesonderten Figuren dargestellt und werden anhand dieser Figuren noch erläutert. So ist beispielsweise der metallische Befestigungskörper 14 mit der integral angesetzten Haltelasche 26 in den Figuren 2 und 3 und das Befestigungselement 24 in den Figuren 4 bis 6 dargestellt, während das Spreizelement 28 in Fig. 7 gezeigt ist.

Der mit der Haltelasche 26 versehene Befestigungskörper 14, der hier als integraler Druckgußteil aus Metall, z.B. als Zink-Druckgußteil ausgebildet sein möge, ist entlang seiner Längsränder mit zwei nach oben vortretenden Versteifungsrippen 38 versehen. In dem zwischen diesen Versteifungsrippen liegenden plattenförmigen Bodenbereich 40 sind an den gegenüberliegenden Enden des Befestigungskörpers 14 rechteckige Öffnungen 42 vorgesehen, durch welche einerseits - wie bereits erwähnt - der Schaft 34 des Spreizelements 28 hindurchtritt, die darüber hinaus aber auch zur Halterung jeweils eines Befestigungszapfens 18 dienen. Zu diesem Zweck sind an den befestigungskörperseitigen Enden des jeweiligen Befestigungszapfens 18 bzw. der der Befestigungsfläche 16 zugewandten Flachseite der Zwischenplatte 22 jeweils zwei sich diametral gegenüberstehende Hakenansätze 44 mit jeweils einem durch die zugeordnete Öffnung 42 hindurchführbaren federnd verbiegbaren Schaftteil 44a und jeweils einem am freien Ende des Schaftteils 44a vorgesehenen in der bestimmungsgemäßen Befestigungsstellung am Befestigungskörper 14 über den Rand der Öffnung 42 greifenden radial nach außen abgewinkelten Hakenvorsprung 44b vorgesehen.

Die in der Zeichnung (Fig. 1 und 4) erkennbare Abschrägung der freien Enden der Hakenvorsprünge 44b ermöglicht die Montage der Befestigungszapfen 18 bzw. des Befestigungselements 24 dadurch, daß die freien Enden der Hakenansätze 44 in die zugeordnete Öffnung eingeführt und dann Druck auf die Befestigungszapfen 18 ausgeübt wird. Durch die Abschrägung der Hakenvorsprünge werden diese unter federnder Verbiegung der Schaftteile 44a in Richtung aufeinander zu gedrängt und die Hakenansätze können dann durch die jeweils zugeordnete Öffnung 42 hindurchgeführt werden. In der bestimmungsgemäßen Befestigungsstellung federn dann die Schaftteile 44a in die Ausgangslage zurück und die Hakenvorsprünge 44b übergreifen die gegenüberliegenden Ränder der Öffnung 42. Der in der bestimmungsgemäßen Befestigungsstellung (Fig. 1) zwischen den Hakenansätzen 44 hindurchtretende Schaft 34 des Spreizelements 28 verhindert eine federnde Verbiegung der Hakenansätze 44 derart, daß sich die Befestigungszapfen 18 und somit das Befestigungselement 24 ungewollt vom Befestigungskörper 14 lösen können.

Dem am Befestigungskörper abgewandten unteren Ende des Schafts 34 angesetzten konischen Spreizkörper 30 ist ein komplementär konischer Endabschnitt 46 im Befestigungszapfen 18 zugeordnet. Durch den rechteckigen oder quadratischen Querschnitt des Schafts 34 wird eine Verdrehung des Spreizelements im jeweiligen Befestigungszapfen 18 verhindert.

Von den Öffnungen 42 nach innen in Richtung zur Haltelasche 26 versetzt ist jeweils noch eine angesenkte Bohrung 48 im Bodenbereich 40 des Befestigungskörpers 14 vorgesehen, durch welche Befestigungsschrauben hindurch geschraubt werden können. Durch diese Bohrungen 48 kann der Beschlag 10 also in der bestimmungsgemäßen Befestigungsstellung zusätzlich mit Senkkopfschrauben gesichert werden.

Im oberen freien Ende des Schafts 34 des Spreizelements ist jeweils eine Querbohrung 50 vorgesehen, durch die ein Stift geführt ist, auf dessen äußeren vortretenden freien Enden das in den Figuren 8 und 9 gezeigte Betätigungselement 36 gelagert ist. Dieses Betätigungselement ist ein Stanz-Preß-Teil aus Metallblech mit zwei den Schaft 34 des Spreizelements 28 passend zwischen sich aufnehmenden seitlichen Wangen 54, in denen in einem Endbereich die Bohrungen 56 für den Verbindungsstift 52 vorgesehen sind. In dem mit der Bohrung 56 versehenen Endbereich 58 sind die Wangen 54 so geformt, daß sie jeweils einen auf dem Bodenbereich 40 des Befestigungskörpers abgestützten Exzenter bilden. Die Wangen 54 der Betätigungselemente 36 sind an ihrem dem exzenterartig ausgebildeten Endbereich 58 gegenüberliegenden Ende durch einen plattenförmigen Stegteil 60 miteinander verbunden, der als Handhabe und gleichzeitig als Anschlag für die Befestigungsstellung dient. In der in Fig. 1 veranschaulichten Montagestellung sind die Betätigungselemente nach außen geschwenkt und die jeweils angeschlossenen Spreizelemente so weit in den Befestigungszapfen abgesenkt, daß diese nicht gespreizt sind. Werden die Betätigungselemente dann aber in die in Fig. 1 unten strichpunktiert dargestellten Befestigungsstellung verschwenkt, wird das Spreizelement in den jeweiligen Befestigungszapfen 18 eingezogen und der Befestigungszapfen in die - ebenfalls strichpunktiert dargestellte - Befestigungsstellung aufgespreizt. Dabei legen sich die im Querschnitt sägezahnförmigen umlaufenden Haltegrate auf der Außenseite der Befestigungszapfen 18 an der Wandung der Befestigungsbohrung 20 in der Frontblende 12 und dringen noch etwas in die Bohrungswandung ein, wodurch eine absolut sichere Befestigung des Beschlags 10 an der Frontblende 12 erhalten wird.

Es ist ersichtlich, daß die vorstehend in Verbindung mit einem Teil eines Halterungsbeschlags für Frontblenden von Schubladen beschriebene, die werkzeuglose Befestigung des Beschlages ermöglichende Befestigungsweise für andere Beschläge, beispielsweise Verbindungsbeschläge, Montageplatten von Scharnieren, Bodenhaltern etc. prinzipiell ebenfalls verwendbar ist, wobei es - insbesondere dann, wenn der betreffende Beschlag nicht gegen Drehung gesichert werden muß, auch ein in der beschriebenen Weise aufspreizbare Befestigungszapfen 18 genügen kann. Andererseits können die Beschläge bei hohen Beanspruchungen auch mit mehr als den beschriebenen zwei Befestigungszapfen versehen werden. Dabei empfiehlt es sich dann, die Befestigungszapfen 18 in der beschriebenen Weise durch eine dünne Zwischenplatte zu einem integralen Befestigungselement 24 zusammenzuschließen, obwohl die Befestigungszapfen ersichtlich auch gesondert hergestellt und einzeln montiert werden können.

## Patentansprüche

1. Lösbar auf der Oberfläche einer Wand eines Möbelstücks befestigbaren Möbelbeschlag (10) mit zwei von seiner der Oberfläche der Möbelstück-Wand zugewandten Befestigungsfläche (16) vortretenden, in jeweils eine zugeordnete Befestigungsbohrung (20) in der Wand einführbaren Befestigungszapfen (18) aus Kunststoff, in deren hohlem Innern ein in Zapfenlängsrichtung verstellbares und den Befestigungszapfen (18) dabei - abhängig von der Verstellrichtung - aufspreizendes bzw. entspannendes Spreizelement (28) angeordnet ist, welches einen in das offene freie Ende des Befestigungszapfens (18) eingesetzten, sich in Richtung zum Beschlag konisch verjüngenden Spreizkörper (30) aufweist, der passend in einem komplementär konischen Endabschnitt (46) des hohen Innern des Befestigungszapfens (18) angeordnet ist, wobei an dem zur Befestigungsfläche (16) des Beschlags (10) weisenden konisch verjüngten Ende des Spreizkörpers (30) ein sich durch den Befestigungszapfen (18) und eine anschließende Öffnung (42) im Beschlag hindurch erstreckender Schaft (34) angesetzt ist, an dessen Ende ein sich an einer Druckfläche des Beschlags abstützendes, mit einer Handhabe versehenes und das Spreizelement (28) bei Betätigung verstellendes Betätigungselement (36) angeschlossen ist,
**dadurch gekennzeichnet,**
daß an der Befestigungsfläche (16) des Beschlages eine die Befestigungszapfen (18) in der vorgesehenen relativen Anordnung zueinander haltende dünne Zwischenplatte aus Kunststoff vorgesehen ist,
daß am beschlagseitigen Ende der Befestigungszapfen (18) jeweils wenigstens ein durch die Öffnung (42) für den Schaft (34) des Spreizelements (28) im Möbelbeschlag hindurchgeführter Hakenansatz (44) vorgesehen ist, welcher den jeweiligen Befestigungszapfen (18) am Möbelbeschlag verriegelt, und
daß die Befestigungszapfen (18), die Zwischenplatte (22) und die Hakenansätze (44) ein integraler Spritzgußteil sind.

2. Möbelbeschlag nach Anspruch 1, dadurch gekennzeichnet, daß an jedem Befestigungszapfen (18) wenigstens zwei am beschlagseitigen Ende des Befestigungszapfens (18) zueinander versetzte Hakenansätze (44) vorgesehen sind, welche jeweils einen integral angesetzten federnd verbiegbaren Schaftteil (44) mit jeweils von dessen befestigungszapfenabgewandtem freien Ende radial nach außen abgewinkeltem Hakenvorsprung (44b) aufweisen, und daß der lichte Abstand zwischen den Schaftteilen (44a) der Hakenansätze (44) entsprechend den äußeren Abmessungen des sie durchsetzenden Schafts (34) des Spreizelements (28) gewählt ist.

3. Möbelbeschlag nach Anspruch 2, dadurch gekennzeichnet, daß die Hakenvorsprünge (44b) an den freien Enden der Hakenansätze (44) derart abgeschrägt sind, daß beim Einführen der Hakenansätze (44) in die zugeordnete Öffnung (42) im Beschlag die Schaftteile (44a) so lange federnd radial einwärts verbogen werden, bis die Hakenvorsprünge (44b) aus dem befestigungsflächenabgewandten oberen Ende der Öffnung (42) austreten und zurückfedern.

4. Möbelbeschlag nach einem der Ansprüche 1 bis 3, dadurch gekennzeichnet, daß das Betätigungselement (36) wenigstens einen um eine parallel zur Befestigungsfläche (16) des Beschlages (10) verlaufende Achse verdrehbaren Exzenterbauteil (58) aufweist.

5. Möbelbeschlag nach einem der Ansprüche 1 bis 4, dadurch gekennzeichnet, daß an dem Betätigungselement (36) ein Hebelarm als Handhabe angesetzt ist.

6. Möbelbeschlag nach Anspruch 4 oder 5, dadurch gekennzeichnet, daß das Betätigungselement (36) als Stanz-Preß-Teil aus Metallblech mit zwei den Schaft (34) des Spreizelements (28) passend zwischen sich aufnehmenden seitlichen Wangen (54) ausgebildet ist, welche durch einen Bohrungen (56; 50) durchsetzenden Bolzen (52) verschwenkbar gekoppelt sind, und daß die Wangen (54) im schaftteilseitigen Endbereich (58) so begrenzt sind, daß sie jeweils einen sich an der Druckfläche des Beschlags abstützenden Exzenterbauteil bilden.

7. Möbelbeschlag nach Anspruch 6, dadurch gekennzeichnet, daß die Wangen (54) eine langgestreckte hebelartige Form haben, die an ihren freien Enen durch einen gleichzeitig die Handhabe bildenden Stegteil (60) miteinander verbunden sind.

## Claims

1. A fitting (10) for releasably fixing to the surface of one wall of an article of furniture, comprising two plastic fixing pegs (18) projecting from a fixing surface (16) of the fitting which faces the surface of the wall of the article of furniture and each insertable into a respective associated fixing bore (20), an expansion element (28) movable in the longitudinal direction of the pegs and expanding or relaxing the pegs (18) depending on the direction of movement being disposed in the hollow interiors of the pegs and comprising an expansion member (30) which tapers conically in the direction towards the fitting and is inserted into the open free end of the peg (18) and is disposed so as to fit into a complementary conical end portion (46) of the hollow interior of the peg (18), wherein a shank (34) extending through the peg (18) and an adjoining opening (42) in the fitting is attached to the conically tapering end of the expansion member (30) pointing towards the fixing surface (16) of the fitting (10), and an actuating element (36) abutting a pressure surface of the fitting and provided with a handle and moving the expansion element (28) when actuated is connected to the end of the shank,
characterised in that
a thin intermediate plate of plastic is provided on the fixing surface (16) of the fitting and holds the pegs (18) in the intended arrangement relative to one another,
in that at least one hook attachment (44) extending through the opening (42) for the shank (34) of the expansion element (28) in the furniture fitting is provided on the end of each peg on the same side as the fitting and locks the respective peg (18) to the fitting, and
in that the pegs (18), the intermediate plate (22) and the hook attachments (44) constitute an integral injection-moulded part.

2. A furniture fitting according to claim 1, characterised in that at least two hook attachments (44) offset from one another at the end of the peg (18) on the same side as the fitting are provided on each peg (18) and each comprise a resiliently bendable, integrally attached shank part (44a) having a hooked projection (44b) bent radially outwards from its free end remote from the peg, and the internal distance between the shank parts (44a) of the hook attachments (44) is chosen in accordance with the outside dimensions of the shank (34) of the expansion element (28) which passes through them.

3. A furniture fitting according to claim 2, characterised in that the hook projections (44b) on the free ends of the hook attachments (44) are so bevelled that when the hook attachments (44) are inserted into the associated opening (42) in the fitting the shank parts (44a) are resiliently bent radially inwards until the hook projections (44b) come out of the top end of the opening (42) remote from the fixing surface and spring back.

4. A furniture fitting according to any of claims 1 to 3, characterised in that the actuating element (36) comprises at least one eccentric component (58) rotatable about an axis extending parallel to the fixing surface (16) of the fitting (10).

5. A furniture fitting according to any of claims 1 to 4, characterised in that a handle in the form of a lever arm is attached to the actuating element (36).

6. A furniture fitting according to claim 4 or 5, characterised in that the actuating element (36) is a punched pressed part of sheet metal having two lateral cheeks (54) which between them receive the shank (34) of the expansion element (28) with a tight fit and are pivotably coupled by a bolt (52) extending through bores (56; 50), and in that the cheeks (54) in the end region (58) on the same side as the shank part are so defined that they each form an eccentric component abutting the pressure surface of the fitting.

7. A furniture fitting according to claim 6, characterised in that the cheeks (54) have an elongate lever-like shape and are connected at their free ends by a web part (60) which also forms the handle.

## Revendications

1. Ferrure de meuble (10) se fixant de manière amovible sur la surface d'une paroi d'un meuble, comportant deux tenons de fixation en plastique (18) qui font saillie de sa surface de fixation (16) dirigée vers la surface de la paroi de meuble, peuvent être introduits chacun dans un trou de fixation correspondant (20) fait dans la paroi, et à l'intérieur creux desquels est placé un élément d'expansion (28) qui est mobile dans la direction longitudinale du tenon de fixation (18), dilate ou détend celui-ci suivant sa direction de déplacement et présente un corps d'expansion (30) qui se rétrécit coniquement en direction de la ferrure, est engagé dans l'extrémité libre ouverte du tenon de fixation (18) et est ajusté dans une partie d'extrémité conique complémentaire (46) de l'intérieur creux du tenon de fixation (18), à l'extrémité rétrécie coniquement du corps d'expansion (30) dirigée vers la surface de fixation (16) de la ferrure (10) étant placée une tige (34) qui traverse le tenon de fixation (18) et passe par une ouverture contiguë (42) de la ferrure et à l'extrémité de laquelle est joint un élément de manoeuvre (36) qui s'appuie sur une surface de pression de la ferrure, est pourvu d'une poignée et, lors de la manoeuvre, déplace l'élément d'expansion (28),
caractérisée par le fait
que, sur la surface de fixation (16) de la ferrure, est prévue une plaque intermédiaire mince en plastique qui maintient les tenons de fixation (18) dans la disposition relative l'un par rapport à l'autre prévue,
qu'à l'extrémité côté ferrure de chaque tenon de fixation (18) est prévu au moins un appendice crochet (44) qui passe par l'ouverture (42) pour la tige (34) de l'élément d'expansion (28) faite dans la ferrure de meuble et verrouille le tenon de fixation correspondant (18) de la ferrure de meuble, et
que les tenons de fixation (18), la plaque intermédiaire (22) et les appendices crochets (44) sont une pièce d'un seul bloc moulée par injection.

2. Ferrure de meuble selon la revendication 1, caractérisée par le fait que sur chaque tenon de fixation (18) sont prévus au moins deux appendices crochets (44) qui sont décalés l'un de l'autre à l'extrémité côté ferrure du tenon de fixation (18) et présentent chacun une partie tige solidaire fléchissable élastiquement (44a) qui a, à son extrémité libre opposée au tenon de fixation, une saillie crochet (44b) dirigée radialement vers l'extérieur, et que la distance entre les parties tiges (44a) des appendices crochets (44) est choisie d'après les dimensions extérieures de la tige traversante (34) de l'élément d'expansion (28).

3. Ferrure de meuble selon la revendication 2, caractérisée par le fait que les saillies crochets (44b) situées aux extrémités libres des appendices crochets (44) sont biseautées de façon telle que, lors de l'introduction des appendices crochets (44) dans l'ouverture correspondante (42) de la ferrure, les parties tiges (44a) soient fléchies élastiquement vers l'intérieur radialement jusqu'à ce que les saillies crochets (44b) sortent de l'extrémité supérieure de l'ouverture (42) opposée à la surface de fixation et reviennent élastiquement.

4. Ferrure de meuble selon l'une des revendications 1 à 3, caractérisée par le fait que l'élément de manoeuvre (36) présente au moins un élément excentrique (58) qui peut tourner autour d'un axe parallèle à la surface de fixation (16) de la ferrure (10).

5. Ferrure de meuble selon l'une des revendications 1 à 4, caractérisée par le fait qu'un bras de levier est placé comme poignée sur l'élément de manoeuvre (36).

6. Ferrure de meuble selon l'une des revendications 4 et 5, caractérisée par le fait que l'élément de manoeuvre (36) est une pièce découpée et estampée en tôle métallique qui a deux joues latérales (54) qui reçoivent entre elles de manière ajustée la tige (34) de l'élément d'expansion (28) et sont accouplées basculantes par un axe (52) passant par des trous (56 ; 50), et que les joues (54) sont limitées dans leur partie d'extrémité côté partie tige (58) de façon à former chacune un élément excentrique s'appuyant sur la surface de pression de la ferrure.

7. Ferrure de meuble selon la revendication 6, caractérisée par le fait que les joues (54) ont une forme allongée du genre levier et sont réunies à leurs extrémités libres par une partie pont (60) qui forme en même temps la poignée.
